# EUROPEAN PATENT SPECIFICATION

(11) **EP 2 093 638 B1**
(45) Date of publication and mention of the grant of the patent: **28.08.2013**
(21) Application number: 09153080.8
(22) Date of filing: 18.02.2009
(51) Int. Cl.: G06F 9/44

(54) **Methods and apparatus to create process plant operator interfaces**
Verfahren und Vorrichtung zum Erstellen von Benutzeroberflächen einer verfahrenstechnischen Anlage
Procédés et appareil de création d'interfaces d'opérateur d'installation de processus

(30) Priority: 20.02.2008 US 33955
(43) Date of publication of application: 26.08.2009
(73) Proprietor: Fisher-Rosemount Systems, Inc., Austin, Texas 78759 (US)
(72) Inventor: Cahill, James S., Austin, TX 78734 (US)
(74) Representative: Bohnenberger, Johannes

(56) References cited:
- US-A- 5 805 442
- US-A1- 2005 278 319
- US-A1- 2007 204 233

## Description

### FIELD OF THE DISCLOSURE

This disclosure relates generally to process plants and, more particularly, to methods and apparatus to create process-plant operator interfaces.

### BACKGROUND

Distributed process control systems, like those used in chemical, petroleum and/or other processes, systems, and/or process plants typically include one or more process controllers communicatively coupled to one or more field devices via any of a variety of analog, digital and/or combined analog/digital buses. In such systems and/or processes, field devices including, for example, valves, valve positioners, switches and/or transmitters (e.g., temperature, pressure, level and flow rate sensors), are located within the process environment and perform process control, alarm and/or management functions such as opening or closing valves, measuring process parameters, etc. Process controllers, which may also be located within the plant environment, receive signals indicative of process measurements made by the field devices and/or other information pertaining to the field devices. Based on, for example, the received signals, the process controllers execute a controller application to realize any number and/or type(s) of control modules, software modules, software sub-systems, routines and/or software threads to initiate alarms, make process control decisions, generate control signals, and/or coordinate with other control modules and/or function blocks performed by field devices, such as HART and Foundation Fieldbus devices. The control modules in the controller(s) send the control signals over the communication lines to the field devices to control the operation of the process plant.

Information from the field devices and/or the controller is usually made available over a data highway or communication network to one or more other hardware devices, such as operator workstations, personal computers, data historians, report generators, centralized databases, etc. Such devices are typically located in control rooms and/or other locations remotely situated relative to the harsher plant environment. These hardware devices, for example, run applications that enable an operator to perform any of a variety of functions with respect to the process(es) of a process plant, such as changing an operating state, changing settings of the process control routine(s), modifying the operation of the control modules within the process controllers and/or the field devices, viewing the current state of the process(es), viewing alarms generated by field devices and/or process controllers, simulating the operation of the process(es) for the purpose of training personnel and/or testing the process control software, keeping and/or updating a configuration database, etc.

As an example, the DeltaV™ digital automation system sold by Fisher-Rosemount Systems, Inc., an Emerson Process Management company, supports multiple applications stored within and/or executed by different devices located at potentially diverse locations within a process plant. A configuration application, which resides in and/or is executed by one or more operator workstations, enables users to create and/or change process control applications, and/or download process control applications via a data highway or communication network to dedicated distributed controllers. Typically, these control applications are made up of communicatively coupled and/or interconnected control modules, software modules, software sub-systems, routines, software threads and/or function blocks that perform functions within the control scheme (e.g., process control and/or alarm generation) based on received inputs and/or that provide outputs to other blocks within the control scheme. Each dedicated controller and, in some cases, field devices, stores and/or executes a control application that runs the control modules assigned to implement actual process control functionality.

The configuration application also allows a configuration engineer to create one or more displays (e.g., a viewing application), for use by operators, maintenance personnel, etc. of the process plant, by selecting and/or building display objects using, for example, a display creation application. An example viewing application displays data for a process-plant operator and/or enables the operator to change settings, such as set points and/or operating states, with the process control routines. These displays are typically implemented on a system-wide basis via one or more of the workstations, and present preconfigured displays to the operator and/or maintenance persons regarding the operating state(s) of the control system(s) and/or the devices within the plant. Example displays take the form of alarming displays that receive and/or display alarms generated by controllers or devices within the process plant, control displays that indicate the operating state(s) of the controller(s) and other device(s) within the process plant, maintenance displays that indicate the functional state of the device(s) and/or equipment within the process plant, etc.

US 5, 805, 442 is considered to be the closest prior art which discusses methods and an apparatus for creating a process plant operator interface.

### SUMMARY

Methods and apparatus to create process-plant operator interfaces are disclosed as seen in claims 1 and 2. A disclosed example method to create a process-plant operator interface includes receiving a search criterion, identifying a user interface module based on the search criterion, and adding the identified user interface module to the process plant operator interface.

A disclosed example operator station apparatus includes a display, an operator display module to present a process plant operator interface on the display, and a search engine to identify a user interface module based upon a search criterion, the operator display module to display an output of the user interface module.

### BRIEF DESCRIPTION OF THE DRAWINGS

FIG. 1 is a schematic illustration of an example process control system constructed in accordance with the teachings of the invention.

FIG. 2 illustrates an example manner of implementing the example operator station of FIG. 1.

FIGS. 3, 4 and 5 illustrate example user interfaces that may be used to create a process-plant operator interface and/or, more generally, the example operator station of FIG. 1.

FIG. 6 is a flowchart representative of an example process that may be carried out to implement the example operator station of FIG. 1.

FIG. 7 is a schematic illustration of an example processor platform that may be used and/or programmed to carry out the example process of FIG. 6 and/or, more generally, to implement the example operator station of FIG. 1.

### DETAILED DESCRIPTION

Process plants are becoming increasingly complicated and difficult to configure and/or monitor. For example, there may be thousands of process control variables that may be set, controlled, viewed and/or monitored by process plant personnel. Moreover, in a process control system it is common for thousands of alarms to be defined within the process control system to notify operators of the process plant of potential problems.

In general, the examples, apparatus, methods, and articles of manufacture described herein may be used to allow a process-plant operator to easily and/or dynamically create process-plant operator displays and/or interfaces. Today, many process-plant operator displays are pre-configured and do not allow a process-plant operator to configure or customize the display of information based upon personal experience, personal preferences, and/or current conditions resulting in an overload of information presented to process-plant operators and/or potentially causing the operators to miss critical process plant conditions. While, a process configuration engineer could conceivably design different process plant display applications for different process plant states and/or conditions, and/or for individual and/or groups of operators, the implementation of such large numbers of display applications is expensive, difficult to maintain and/or otherwise burdensome and is not as flexible as the example apparatus, methods and articles of manufactured described herein.

In particular, the examples described herein allow a process-plant operator to create tailored, dynamic and/or customized process-plant operator interfaces and/or displays. As described, elements of process-plant operator interfaces (e.g., graphs of process variables, displays of current process variables, transaction based interfaces to control and/or configure the process plant, etc.) are modularized into user interface modules (i.e., so-called gadgets and/or plug-ins). To facilitate the identification and/or selection of potentially desirable user interface modules, example user interface modules described herein have associated metadata (e.g., title, description, keywords, associated equipment names, etc.) and/or embedded text which could be indexed. Based on one or more search criteria (e.g., word(s), keyword(s), phrase(s), and/or logical expression(s) of words, keywords and/or phrases) provided by a process-plant operator, user interface module metadata is used to search for and/or identify one or more user interface modules of potential interest to the operator. The operator may then select one or more of the identified user interface modules, and the operator workstation creates and/or updates a process-plant operator interface based on the selection(s). In some examples, the user interface modules are carried out, implemented and/or executed on, by and/or within the operator workstation. In other examples, one or more user interface modules are carried out, implemented and/or executed on, by and/or within other workstations and/or process plant controllers, with the outputs and/or input elements of the user interface module(s) being displayed at the operator workstation.

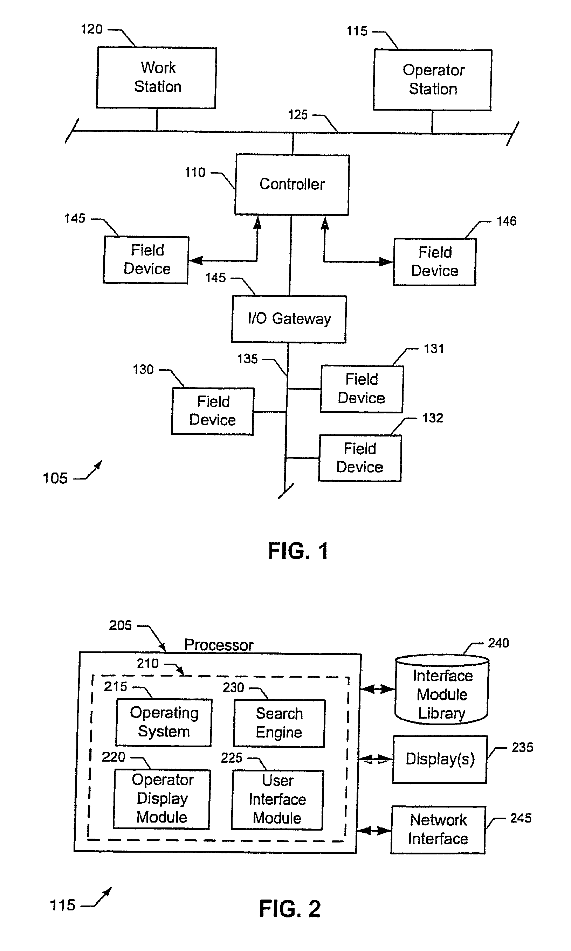

FIG. 1 is a schematic illustration of an example process control system 105. The example process control system 105 of FIG. 1 includes one or more process controllers (one of which is designated at reference numeral 110), one or more operator stations (one of which is designated at reference numeral 115), and one or more workstations (one of which are designated at reference numeral 120). The example process controller 110, the example operator station 115 and the workstation 120 are communicatively coupled via a bus and/or local area network (LAN) 125, which is commonly referred to as an application control network (ACN).

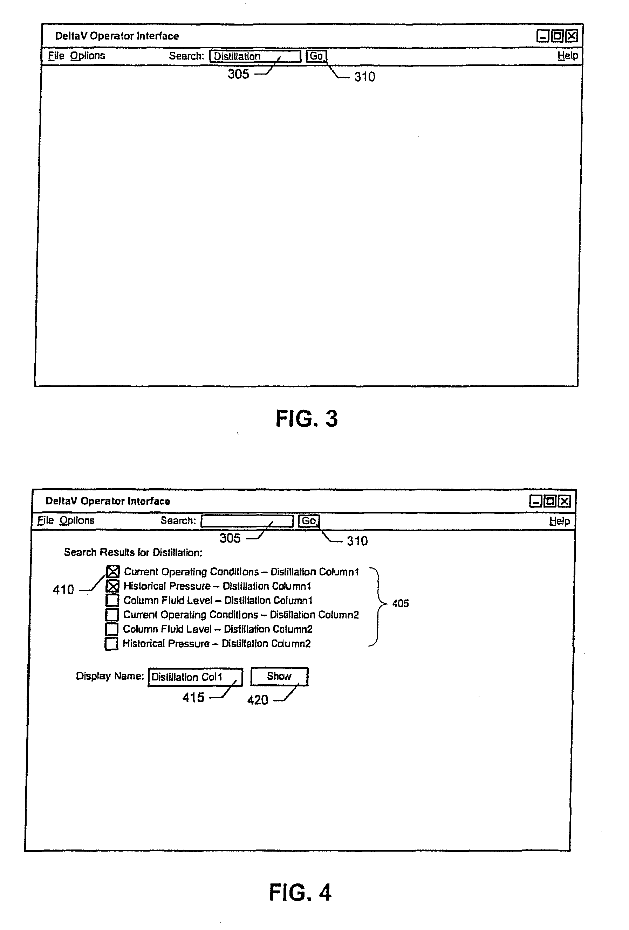

The example operator station 115 of FIG. 1 allows a process-plant operator to review and/or operate one or more operator display screens and/or applications that allow the process-plant operator to view process plant variables, view process plant states, view process plant conditions, view process plant alarms, and/or to change process plant settings (e.g., set points and/or operating states, clear alarms, silence alarms, etc.). Such screens and/or applications are typically designed and/or implemented by process configuration engineers. An example manner of implementing the example operator station 115 of FIG. 1 is described below in connection with FIG. 2. Example operator display applications and/or interfaces that may be used to implement the example operator station 115 are described below in connection with FIGS. 3, 4 and 5.

The example operator station 115 of FIG. 1 includes and/or implements one or more user interfaces (e.g., the example interfaces of FIGS. 3-5) to allow a process-plant operator to search for, identify and/or select one more user interface modules useful to create, modify, customize and/or augment a process plant operator display and/or interface. User interface modules are modularized interfaces and/or software entities that may be used to create and/or construct a process plant operator interface and/or display. User interface modules may be used to monitor and/or control one or more portions of a process plant, and/or one or more specific pieces and/or collections of process plant equipment. Example user interface modules include, but are not limited to, modules that collect and graph one or more current and/or historical process variables, that collect and/or display one or more current and/or historical process variables, more or more control elements (e.g., check boxes, slider bars, etc.) that allow a process plant operator to control and/or configure a process plant, and/or transaction based interfaces to control and/or configure the process plant, etc.
To facilitate the selection and/or identification of applicable user interface modules, user interface modules have associated metadata and/or embedded text, such as, title, description, keywords, associated equipment names, process names, etc., which could be indexed and/or searched by a search engine.

In some examples, user interface modules are carried out, implemented and/or executed on, by and/or within the operator workstation being used to implement the process plant operator display. In other examples, one or more user interface modules are carried out, implemented and/or executed on, by and/or within other workstations and/or process plant controllers, with the outputs and/or input elements of the user interface module(s) being displayed at the operator workstation.

The example workstation 120 of FIG. 1 may be configured as an application station to perform one or more information technology applications, user-interactive applications and/or communication applications. For example, the application station 120 may be configured to perform primarily process control-related applications, while another application station (not shown) may be configured to perform primarily communication applications that enable the process control system 105 to communicate with other devices or systems using any desired communication media (e.g., wireless, hardwired, etc.) and protocols (e.g., HTTP, SOAP, etc.). The example operator station 115 and the example workstation 120 of FIG. 1 may be implemented using one or more workstations and/or any other suitable computer systems and/or processing systems. For example, the operator station 115 and/or workstation 120 could be implemented using single processor personal computers, single or multi-processor workstations, etc.

The example LAN 125 of FIG. 1 may be implemented using any desired communication medium and protocol. For example, the example LAN 125 may be based on a hardwired and/or wireless Ethernet communication scheme. However, as will be readily appreciated by those having ordinary skill in the art, any other suitable communication medium(s) and/or protocol(s) could be used. Further, although a single LAN 125 is illustrated in FIG. 1, more than one LAN and/or other alternative pieces of communication hardware (e.g., hubs and/or switches) may be used to provide redundant communication paths between the example systems of FIG. 1.

The example controller 110 of FIG. 1 is coupled to a plurality of smart field devices 130, 131 and 132 via a digital data bus 135 and an input/output (I/O) gateway 140. The smart field devices 130-132 may be Fieldbus compliant valves, actuators, sensors, etc., in which case the smart field devices 130-132 communicate via the digital data bus 135 using the well-known Foundation Fieldbus protocol. Of course, other types of smart field devices and communication protocols could be used instead. For example, the smart field devices 130-132 could instead be Profibus and/or HART compliant devices that communicate via the data bus 135 using the well-known Profibus and HART communication protocols.
Additional I/O devices (similar and/or identical to the I/O gateway 140 may be coupled to the controller 110 to enable additional groups of smart field devices, which may be Foundation Fieldbus devices, HART devices, etc., to communicate with the controller 110. Such smart field devices may provide significantly more data and/or information than non-smart field devices and, thus, may contribute to the information overload problem(s) addressed by the methods and apparatus described herein.

In addition to the example smart field devices 130-132, one or more non-smart field devices 145 and 146 may be communicatively coupled to the example controller 110. The example non-smart field devices 145 and 146 of FIG. 1 may be, for example, conventional 4-20 milliamp (mA) or 0-10 volts direct current (VDC) devices that communicate with the controller 110 via respective hardwired links.

The example controller 110 of FIG. 1 may be, for example, a DeltaV™ controller sold by Fisher-Rosemount Systems, Inc., an Emerson Process Management company. However, any other controller could be used instead. Further, while only one controller 110 in shown in FIG. 1, additional controllers and/or process control platforms of any desired type and/or combination of types could be coupled to the LAN 125. In any case, the example controller 110 performs one or more process control routines associated with the process control system 105 that have been generated by a system engineer and/or other system operator using the operator station 115 and which have been downloaded to and/or instantiated in the controller 110.

While FIG. 1 illustrates an example process control system 105 within which the methods and apparatus to create process plant operator interfaces and/or displays described in greater detail below may be advantageously employed, persons of ordinary skill in the art will readily appreciate that the methods and apparatus to control how and/or what information is presented to process plant operators described herein may, if desired, be advantageously employed in other process plants and/or process control systems of greater or less complexity (e.g., having more than one controller, across more than one geographic location, etc.) than the illustrated example of FIG. 1.

FIG. 2 illustrates an example manner of implementing the example operator station 115 of FIG. 1. The example operator station 115 of FIG. 2 includes at least one programmable processor 205. The example processor 205 of FIG. 2 executes coded instructions present in a main memory 210 of the processor 205 (e.g., within a random-access memory (RAM) and/or a read-only memory (ROM)). The processor 205 may be any type of processing unit, such as a processor core, a processor and/or a microcontroller. The processor 205 may execute, among other things, an operating system 215, an operator display module 220, one or more user interface modules (one of which is designated at reference numeral 225), and a search engine 230. An example operating system 215 is an operating system from Microsoft^{®}. The example main memory 210 of FIG. 2 may be implemented by and/or within the processor 205 and/or may be one or more memories and/or memory devices operatively coupled to the processor 205.

To allow an operator to interact with the example processor 205, the example operator station 115 of FIG. 2 includes any number and/or type(s) of displays (one of which is designated at reference numeral 235). Example displays 235 include, but are not limited to, a computer monitor, a computer screen, a television, a mobile device (e.g., a smart phone, a Blackberry^{™} and/or an iPhone™), etc. capable to display user interfaces and/or applications implemented by the processor 205 and/or, more generally, the example operator station 115.

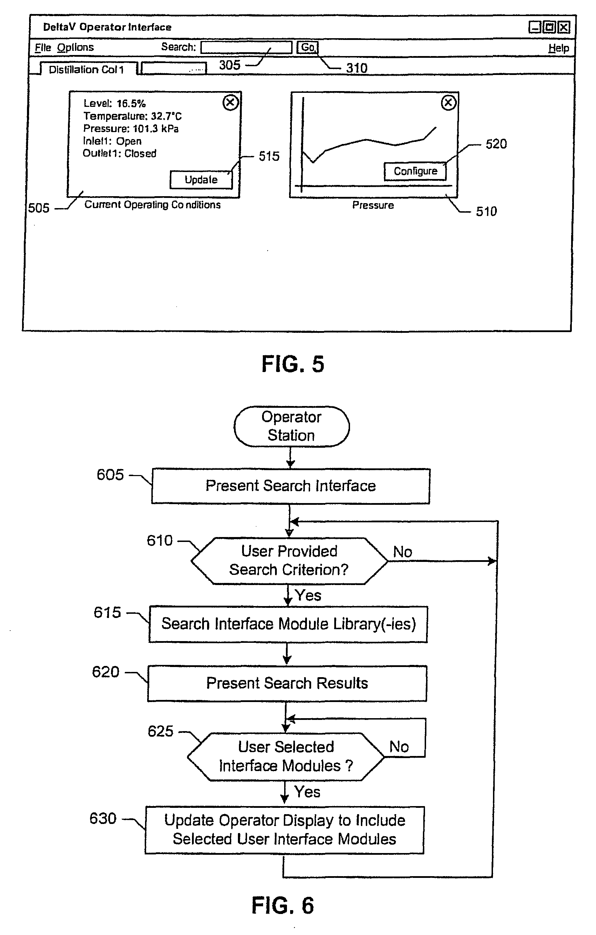

The example operating system 215 of FIG. 2 displays and/or facilitates the display of application user interfaces (e.g., created by the example operator display module 220 using the example user interface module 225) by and/or at the example display 235. To facilitate the creation, definition and/or modification of process plant operator interfaces, the example operating system 215 implements an application programming interface (API) by which the example operator display module 220 and/or the example search engine 230 can define and/or select one or more user interface modules (e.g., the user interface module 225), and cause and/or instruct the operating system 215 to display the selected user interface module(s) 225. Example user interface modules 225 are described below in connection with FIG. 5.

To create, modify and/or present process plant operator displays and/or applications, the example operator station 115 of FIG. 2 includes the example operator display module 220. The example operator display module 220 of FIG. 2 collects graphics, user interface elements (e.g., graphs, slider bars, tables, etc.), data (e.g., current and/or historical) and/or information (e.g., state information) from one or more user interface modules (e.g., the example user interface module 225), and uses the collected graphics, user interface elements, data and/or information to create and/or define a particular user interface (e.g., the example interface of FIG. 5) based on the state of the process plant and/or a portion of the process plant selected by an operator. The created and/or defined display is displayed at the example display 235 by and/or via the example operating system 215. The example operator display module 220 can also receives operator inputs via the user interface module 225 (e.g., in response to the operator selecting, adjusting and/or operating user interface elements of the user interface module(s) 225) and sends appropriate commands, data and/or information to the controller 110 and/or, more generally, the process control system 105.

To store user interface modules (e.g., the example user interface module 225), the example operator station 115 of FIG. 2 includes an interface module library 240. Using any type(s) and/or numbers of database records, fields and/or entries, the example interface module library 240 of FIG. 2 stores data and/or information used by, carried out by, implemented by and/or executed by the example operator display module 220. User interface modules may be stored in the interface module library 240 using any data structure(s) and/or file format(s). To facilitate the selection and/or identification of applicable user interface modules, user interface modules are stored in the interface module library 240 together with associated metadata and/or embedded text, such as, title, description, keywords, associated equipment names, process names, etc., which could be indexed and/or searched by a search engine. The example interface module library 240 may be stored using any type(s) and/or numbers of memory(-ies) and/or memory device(s). When a particular user interface module (e.g., the example module 225) is to be part of a process plant operator display, the user interface module together with the appropriate data matching the search criterion is copied from the interface module library 240 into the main memory 210.

To communicatively couple the example operator station 115 of FIG. 2 with other workstations (e.g., the example workstation 120 of FIG. 1) and/or process plant controllers (e.g., the example controller 110), the example operator station 115 includes any type(s) and/or number(s) of network interface (one of which is designated at reference numeral 245). The example network interface 245 can be used by the example search engine 230 to search one or more alternative and/or additional interface module libraries stored within, by and/or at one or more other process plant devices (e.g., the example workstation 120 and/or the example controller 110).

When a user of operator station 115 indicates a desire to create and/or modify an operator display (e.g., by initiating a search as described below in connection with FIG. 3), the example search engine 230 of FIG. 2 performs a search of the example interface module library 240 (and/or one or more interface modules libraries implemented and/or stored at, by and/or within other process plant devices) for user interface modules having one or more associated metadata elements matching one or more of the search criteria (e.g., word(s), keyword(s), phrase(s), and/or logical expression(s) of words, keywords and/or phrases) provided by the process plant operator. Based on the user interface modules identified by the example search engine 230, the example operator display module 220 presents a user interface module selection interface (e.g., the example interface of FIG. 4). When user interface module selections are made and/or completed by the process plant operator, the example operator display module 220 creates a corresponding process plant operator interface (e.g., the example interface of FIG. 5) based on the selected user interface modules.

While an example manner of implementing the example operator station 115 of FIG. 1 has been illustrated in FIG. 2, the data structures, elements, processes and devices illustrated in FIG. 2 may be combined, divided, re-arranged, omitted, shared, eliminated and/or implemented in any other way. Further, the example operating system 215, the example operator display module 220, the example user interface module 225, the example search engine 230, the example display 235, the example interface module library 240, the example network interface 245 and/or, more generally, the example operator station 115 of FIG. 2 may be implemented by hardware, software, firmware and/or any combination of hardware, software and/or firmware. Further still, the example operator station 115 may include additional elements, processes and/or devices instead of, or in addition to, those illustrated in FIG. 2, and/or may include more than one of any or all of the illustrated data structures, elements, processes and devices.

FIGS. 3 and 4 illustrate example user interfaces that may be used to create an operator display and/or operator application (e.g., the example operator display of FIG. 5), and/or, more generally, the example operator station 115 of FIG. 1. The example user interfaces of FIGS. 3, 4 and/or 5 are implemented using a web browser (e.g., Internet Explorer, Firefox, Safari, etc.) wherein user interface modules are implemented as web-based plug-ins and/or gadgets. Additionally or alternatively, the example interfaces of FIGS. 3-5 may be implemented using custom applications and/or user interfaces. While example user interfaces that may be used to implement the example operator stations 115 of FIGS. 1 and 2 are illustrated in FIGS. 3-5, the example operator station 115 of FIGS. 1 and/or 2 may be implemented using any number and/or type of additional and/or alternative user interfaces.

To allow an operator to specify a search criterion, the example user interface of FIG. 3 includes a search-term text-entry box 305. The example search-term text-entry box 305 of FIG. 3 can be used to type and/or enter one or more search criteria to be used to search for and/or identify user interface modules of potential interest. Example search criteria include, but are not limited to, one or more words (e.g., separated by commas, semi-colons, spaces or quotation marks), keywords, phrases, and/or logical expressions of words, keywords and/or phrases. To initiate a search, the example user interface of FIG. 3 includes a button 310. When the example button 310 is activated (e.g., by clicking on the button 310 with a computer mouse, and/or by pressing the ENTER or RETURN key while typing in the text-entry box 305), the example search engine 230 uses the search criterion entered in the text-entry box 305 to identify one or more user interface modules, having metadata and/or embedded text matching the search criterion, of potential interest to the operator.

The example user interface of FIG. 4 displays a user interface provided and/or presented by the example operator display module 220 to present the results 405 of a user interface module search completed by the example search engine 230. In the example interface of FIG. 3, the text-entry box 305 contained the search criterion "Distillation." As such, the example user interface of FIG. 4 presents the results 405 corresponding to user interface modules having the word "Distillation" in their metadata and/or embedded text (e.g., title, description, etc.). To allow the operator to select all or a subset of the listed user interface modules 405, each of the listed user interface modules 405 has an associated check box 410. To select the user interface modules to be displayed, the operator clicks on the associated check box(es) 410. To allow the operator to name the display, the example user interface of FIG. 4 includes a name text-entry box 415. In the illustrated example of FIG. 4, the operator chooses a historical pressure graph and a display of current operating conditions for "Distillation Column1." To create the operator display based on the selected user interface modules and the display name 415, the example user interface of FIG. 4 includes a button 420. When the button 420 is activated (e.g., by clicking on the button 420 with a computer mouse), the example operator display module 220 creates the desired operator interface (e.g., the example user interface of FIG. 5). Alternatively, the operator can initiate a different search using the text-entry box 305 and the button 310.

FIG. 5 illustrates an example process plant operator display resulting from the example user interfaces of FIGS. 3 and 4. In the illustrated example of FIG. 5, two plug-ins 505 and 510 are displayed corresponding to the two user interface modules selected in the example user interface of FIG. 4. The example plug-in 505 of FIG. 5 displays the current values of a number of operating parameters. The example plug-in 505 also includes a button 515 that allows the operator to refresh the values. In other examples, the plug-in 505 could periodically or aperiodically update itself based upon a timer or some other triggering event. The example plug-in 510 of FIG. 5 displays a graph of historical pressure values and includes a button 520 that allows the operator to configure the graph (e.g., which days and/or times are to be included in the graph). The example process plant operator display of FIG. 5 is a dynamic interface wherein a process plant operator can close individual interface modules, browse a library of interface modules, manually add modules, search for additional interface modules (e.g., using methods that are substantially similar to those described above in connection with FIGS. 3 and 4), and/or drag and/or drop interface modules around the display (e.g., into different columns or arrangements).

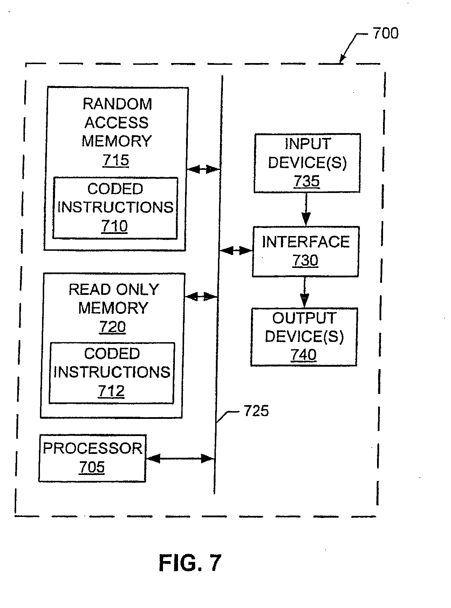

FIG. 6 is a flowchart representative of an example process that may be carried out by the example operator station 115 of FIGS. 1 and/or 2. The example process of FIG. 6 may be carried out by a processor, a controller and/or any other suitable processing device. For example, the example process of FIG. 6 may be embodied in coded instructions stored on a tangible machine accessible or readable medium such as a flash memory, a ROM and/or random-access memory RAM associated with a processor (e.g., the example processor 705 discussed below in connection with FIG. 7). Alternatively, some or all of the example operations of FIG. 6 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, one or more of the operations depicted in FIG. 6 may be implemented manually or as any combination of any of the foregoing techniques, for example, any combination of firmware, software, discrete logic and/or hardware. Further, although the example process of FIG. 6 is described with reference to the flowchart of FIG. 6, persons of ordinary skill in the art will readily appreciate that many other methods of implementing the example process of FIG. 6 may be employed. For example, the order of execution of the blocks may be changed, and/or some of the blocks described may be changed, eliminated, sub-divided, or combined. Additionally, persons of ordinary skill in the art will appreciate that any or all of the example operations of FIG. 6 may be carried out sequentially and/or carried out in parallel by, for example, separate processing threads, processors, devices, discrete logic, circuits, etc.

The example process of FIG. 6 begins with an operator station (e.g., the example operator display module 220 of FIG. 2) displaying a user interface (e.g., the example user interface of FIG. 3) (block 605). When a user (e.g., a process plant operator) selects a control user interface element and/or graphic (e.g., the example button 310) to initiate a search (block 610), the operator station (e.g., the example search engine 230) performs a search for applicable user interface modules based on the operator provided search criterion (e.g., keywords) (block 615). The operator station may search a local interface module library and/or one or more shared interface module libraries.

Based upon the search results, the operator display module presents the search results (e.g., using the example user interface of FIG. 4) (block 620). Once the operator makes their user interface module selections (block 625), the operator display module creates the process plant operator display (e.g., the example user interface of FIG. 5) based on the selected user interface modules (block 630). Control then returns to block 605 to allow the operator to initiate another search and/or to modify the created operator display.

FIG. 7 is a schematic diagram of an example processor platform 700 that may be used and/or programmed to implement any or all of the example operator stations 115 of FIGS. 1 and/or 2. For example, the processor platform 700 can be implemented by one or more general purpose processors, processor cores, microcontrollers, etc.

The processor platform 700 of the example of FIG. 7 includes at least one general purpose programmable processor 705. The processor 705 executes coded instructions 710 and/or 712 present in main memory of the processor 705 (e.g., within a RAM 715 and/or a ROM 720). The processor 705 may be any type of processing unit, such as a processor core, a processor and/or a microcontroller. The processor 705 may execute, among other things, the example process of FIG. 6 to implement the example operator stations 115 described herein. The processor 705 is in communication with the main memory (including a ROM 720 and/or the RAM 715) via a bus 725. The RAM 715 may be implemented by DRAM, SDRAM, and/or any other type of RAM device, and ROM may be implemented by flash memory and/or any other desired type of memory device. Access to the memories 715 and 720 may be controlled by a memory controller (not shown).

The processor platform 700 also includes an interface circuit 730. The interface circuit 730 may be implemented by any type of interface standard, such as a USB interface, a Bluetooth interface, an external memory interface, serial port, general purpose input/output, etc. One or more input devices 735 and one or more output devices 740 are connected to the interface circuit 730. The input devices 735 and/or output devices 740 may be used to, for example, provide the example user interfaces of FIGS. 3, 4 and/or 5 to the example display 235 of FIG 2.

## Claims

1. A method to create a process plant operator interface, the method comprising:
receiving a search criterion;
identifying a user interface module based on the search criterion, including searching an interface module library and comparing the search criterion with at least one of metadata or embedded text associated with respective ones of two or more user interface modules of the interface module library; and
adding the identified user interface module to the process plant operator interface.

2. A method as defined in claim 1, wherein the search criterion comprises at least one of a word, two or more words, a phrase, a logical expression of words, a logical expression of phrases, or a logical expression of words and phrases.

3. A method as defined in claim 1, wherein the at least one of metadata or embedded text associated with each of the two or more user interface modules comprises at least one of an interface module title, an interface module description, or an interface module keyword.

4. A method as defined in claim 1, wherein identifying the user interface module comprises:
identifying one or more user interface modules associated with the search criterion;
presenting a list of the one or more user interface modules; and
receiving a selection of the identified user interface module.

5. A method as defined in claim 1, wherein adding the identified user interface module to the process plant operator interface comprises:
loading the user interface module into a machine accessible memory;
adding a graphic associated with the user interface module to the process plant operator interface; and
initiating execution of the user interface module.

6. A method as defined in claim 1, wherein the user interface module and the process plant operator interface are executed at a same computer.

7. A method as defined in claim 1, wherein the user interface module and the process plant operator interface are executed at different computers, and wherein the process plant operator interface displays data provided by the user interface module to the process plant operator interface.

8. A method as defined in claim 1, wherein the user interface module comprises at least one of a display of a data value, a display of a graph, a display of a graphic image, a display of current data, a display of historical data, a display of a list of data, a display of data extracted from a database, a display of data collected from a process plant controller, a display of data collected from a process plant field device, or a transaction-based interface.

9. A method as defined in claim 1, wherein the interface module library is stored at a computer presenting the process plant operator interface.

10. A method as defined in claim 1, wherein the interface module library is stored remotely from a computer presenting the process plant operator interface.

11. An operator station apparatus comprising:
a display;
an operator display module to present a process plant operator interface on the display;
a search engine to identify a user interface module based upon a search criterion, the operator display module to display an output of the user interface module; and
a user interface module library, wherein the search criterion is compared with at least one of metadata or embedded text associated with each of a plurality interface modules stored in the user interface module library to identify the user interface module having the output to be displayed.

12. An apparatus as defined in claim 11, further comprising a network interface, wherein the user interface module library is located remotely from the operator station apparatus, and the user interface module library is searched via the network interface.

13. An apparatus as defined in claim 11, wherein the at least one of metadata or embedded text associated with each of the plurality of interface modules comprises at least one of an interface module title, an interface module description, or an interface module keyword.

14. An apparatus as defined in claim 11, wherein the operator display module is to:
present a first interface to receive the search criterion;
present a second interface to present a search result and to receive an interface selection input associated with the identified user interface module; and
add the user interface module to the process plant operator interface.

15. An apparatus as defined in claim 11, wherein the user interface module comprises at least one of a display of a data value, a display of a graph, a display of a graphic image, a display of current data, a display of historical data, a display of a list of data, a display of data extracted from a database, a display of data collected from a process plant controller, a display of data collected from a process plant field device, or a transaction-based interface.

16. An apparatus as defined in claim 11, wherein the operator station apparatus comprises an operator station of a process plant control system.

17. An article of manufacture storing machine readable instructions which, when executed, cause a machine to create a process plant operator interface by:
receiving a search criterion;
identifying a user interface module based on the search criterion, including searching an interface module library and comparing the search criterion with at least one of metadata or embedded text associated with respective ones of two or more user interface modules of the interface module library; and
adding the identified user interface module to the process plant operator interface.

18. An article of manufacture as defined in claim 17, wherein the search criterion comprises at least one of a word, two or more words, a phrase, a logical expression of words, a logical expression of phrases, or a logical expression of words and phrases.

19. An article of manufacture as defined in claim 18, wherein the at least one of the metadata or the embedded text associated with each of the two or more user interface modules comprises at least one of an interface module title, an interface module description, or an interface module keyword.

20. An article of manufacture as defined in claim 17, wherein the machine readable instructions, when executed, cause the machine to identify the user interface module by:
identifying one or more user interface modules associated with the search criterion;
presenting a list of the one or more user interface modules; and
receiving a selection of the identified user interface module.

21. An article of manufacture as defined in claim 17, wherein the machine readable instructions, when executed, cause the machine to add the identified user interface module to the process plant operator interface by:
loading the user interface module into a machine accessible memory;
adding a graphic associated with the user interface module to the process plant operator interface; and
initiating execution of the user interface module.

22. An article of manufacture as defined in claim 17, wherein the user interface module comprises at least one of a display of a data value, a display of a graph, a display of a graphic image, a display of current data, a display of historical data, a display of a list of data, a display of data extracted from a database, a display of data collected from a process plant controller, a display of data collected from a process plant field device, or a transaction-based interface.

## Patentansprüche

1. Verfahren zum Erstellen einer Prozessanlagenbedieneroberfläche, wobei das Verfahren umfasst:
Aufnehmen eines Suchkriteriums;
Identifizieren eines Benutzeroberflächenbausteins auf Grundlage des Suchkriteriums, was beinhaltet, eine Schnittstellenbausteinbibliothek zu durchsuchen und das Suchkriterium mit Metadaten und/oder eingebettetem Text zu vergleichen, die bzw. der mit jeweiligen von zwei oder mehr Benutzeroberflächenbausteinen der Schnittstellenbausteinbibliothek assoziiert sind bzw. ist; und
Hinzufügen des identifizierten Benutzeroberflächenbausteins zur Prozessanlagenbedieneroberfläche.

2. Verfahren nach Anspruch 1, wobei das Suchkriterium ein Wort, zwei oder mehr Wörter, einen Satz, einen logischen Ausdruck von Wörtern, einen logischen Ausdruck von Sätzen und/oder einen logischen Ausdruck von Wörtern und Sätzen umfasst.

3. Verfahren nach Anspruch 1, wobei die Metadaten und/oder der eingebettete Text, die bzw. der mit jeweils den zwei oder mehr Benutzeroberflächenbausteinen assoziiert sind bzw. ist, einen Schnittstellenbausteintitel, eine Schnittstellenbausteinbeschreibung und/oder ein Schnittstellenbausteinschlüsselwort umfassen bzw. umfasst.

4. Verfahren nach Anspruch 1, wobei das Identifizieren des Benutzeroberflächenbausteins umfasst:
Identifizieren eines Schnittstellenbausteins oder mehrerer Schnittstellenbausteine, der bzw. die mit dem Suchkriterium assoziiert ist bzw. sind;
Präsentieren einer Liste des einen Schnittstellenbausteins oder der mehreren Schnittstellenbausteine; und
Aufnehmen einer Auswahl der identifizierten Benutzeroberflächenbausteine.

5. Verfahren nach Anspruch 1, wobei das Hinzufügen des identifizierten Benutzeroberflächenbausteins zur Prozessanlagenbedieneroberfläche umfasst:
Laden des Benutzeroberflächenbausteins in einen maschinenzugänglichen Speicher;
Hinzufügen einer mit dem Benutzeroberflächenbaustein assoziierten Grafik zur Prozessanlagenbedieneroberfläche; und
Initiieren einer Ausführung des Benutzeroberflächenbausteins.

6. Verfahren nach Anspruch 1, wobei der Benutzeroberflächenbaustein und die Prozessanlagenbedieneroberfläche auf ein und demselben Computer ausgeführt werden.

7. Verfahren nach Anspruch 1, wobei der Benutzeroberflächenbaustein und die Prozessanlagenbedieneroberfläche auf verschiedenen Computern ausgeführt werden, und wobei die Prozessanlagenbedieneroberfläche Daten anzeigt, die der Prozessanlagenbedieneroberfläche durch den Benutzeroberflächenbaustein bereitgestellt werden.

8. Verfahren nach Anspruch 1, wobei der Benutzeroberflächenbaustein eine Anzeige eines Datenwerts, eine Anzeige einer Grafik, eine Anzeige eines Grafikbilds, eine Anzeige aktueller Daten, eine Anzeige von Verlaufsdaten, einer Anzeige einer Liste von Daten, eine Anzeige von aus einer Datenbank extrahierten Daten, eine Anzeige von aus einer Prozessanlagensteuerung erfassten Daten, eine Anzeige von aus einem Prozessanlagenfeldgerät erfassten Daten und/oder eine transaktionsbasierte Oberfläche umfasst.

9. Verfahren nach Anspruch 1, wobei die Schnittstellenbausteinbibliothek in einem Computer gespeichert ist, der die Prozessanlagenbedieneroberfläche darstellt.

10. Verfahren nach Anspruch 1, wobei die Schnittstellenbausteinbibliothek abgesetzt von einem Computer gespeichert ist, der die Prozessanlagenbedieneroberfläche darstellt.

11. Bedienerstationsvorrichtung, Folgendes umfassend:
eine Anzeige;
einen Bedieneranzeigebaustein zum Darstellen einer Prozessanlagenbedieneroberfläche auf der Anzeige;
ein Suchmaschine zum Identifizieren eines Benutzerschnittstellenmoduls auf Grundlage eines Suchkriteriums, wobei der Bedieneranzeigebaustein zur Anzeige eines Ausgangs des Benutzeroberflächenbausteins bestimmt ist; und
eine Benutzeroberflächenbausteinbibliothek, wobei das Suchkriterium mit Metadaten und/oder eingebettetem Text, die bzw. der mit jeweils mehreren in der Benutzeroberflächenbausteinbibliothek gespeicherten Schnittstellenbausteinen assoziiert sind bzw. ist, verglichen wird, um den Benutzeroberflächenbaustein mit dem anzuzeigenden Ausgang zu identifizieren.

12. Vorrichtung nach Anspruch 11, darüber hinaus eine Netzschnittstelle umfassend, wobei die Benutzeroberflächenbausteinbibliothek abgesetzt von der Bedienerstationsvorrichtung angeordnet ist, und die Benutzeroberflächenbausteinbibliothek über die Netzschnittstelle durchsucht wird.

13. Vorrichtung nach Anspruch 11, wobei die Metadaten und/oder der eingebettete Text, die bzw. der mit jeweils den mehreren Schnittstellenbausteinen assoziiert sind bzw. ist, einen Schnittstellenbausteintitel, eine Schnittstellenbausteinbeschreibung und/oder ein Schnittstellenbausteinschlüsselwort umfassen bzw. umfasst.

14. Vorrichtung nach Anspruch 11, wobei der Bedieneranzeigebaustein dazu bestimmt ist:
eine erste Oberfläche zur Aufnahme des Suchkriteriums zu präsentieren;
eine zweite Oberfläche zum Darstellen eines Suchergebnisses und zum Aufnehmen einer Oberflächenauswahleingabe zu präsentieren, die mit dem identifizierten Benutzeroberflächenbaustein assoziiert ist; und
den Benutzeroberflächenbaustein zur Prozessanlagenbedieneroberfläche hinzuzufügen.

15. Vorrichtung nach Anspruch 11, wobei der Benutzeroberflächenbaustein eine Anzeige eines Datenwerts, eine Anzeige einer Grafik, eine Anzeige eines Grafikbilds, eine Anzeige aktueller Daten, eine Anzeige von Verlaufsdaten, eine Anzeige einer Liste von Daten, eine Anzeige von aus einer Datenbank extrahierten Daten, eine Anzeige von aus einer Prozessanlagensteuerung erfassten Daten, eine Anzeige von aus einem Prozessanlagenfeldgerät erfassten Daten und/oder eine transaktionsbasierte Oberfläche umfasst.

16. Vorrichtung nach Anspruch 11, wobei die Bedienerstationsvorrichtung eine Bedienerstation eines Prozessanlagensteuersystems umfasst.

17. Herstellungsgegenstand, der maschinenlesbare Befehle speichert, die, wenn sie ausgeführt werden, bewirken, dass eine Maschine eine Prozessanlagenbedieneroberfläche erstellt durch:
Aufnehmen eines Suchkriteriums;
Identifizieren eines Benutzeroberflächenbausteins auf Grundlage des Suchkriteriums, was beinhaltet, eine Schnittstellenbausteinbibliothek zu durchsuchen und das Suchkriterium mit Metadaten und/oder eingebettetem Text zu vergleichen, die bzw. der mit jeweiligen von zwei oder mehr Benutzeroberflächenbausteinen der Schnittstellenbausteinbibliothek assoziiert sind bzw. ist; und
Hinzufügen des identifizierten Benutzeroberflächenbausteins zur Prozessanlagenbedieneroberfläche.

18. Herstellungsgegenstand nach Anspruch 17, wobei das Suchkriterium ein Wort, zwei oder mehr Wörter, einen Satz, einen logischen Ausdruck von Wörtern, einen logischen Ausdruck von Sätzen und/oder einen logischen Ausdruck von Wörtern und Sätzen umfasst.

19. Herstellungsgegenstand nach Anspruch 18, wobei die Metadaten und/oder der eingebettete Text, die bzw. der mit jeweils den zwei oder mehr Benutzeroberflächenbausteinen assoziiert sind bzw. ist, einen Schnittstellenbausteintitel, eine Schnittstellenbausteinbeschreibung und/oder ein Schnittstellenbausteinschlüsselwort umfassen bzw. umfasst.

20. Herstellungsgegenstand nach Anspruch 17, wobei die maschinenlesbaren Befehle, wenn sie ausgeführt werden, bewirken, dass die Maschine den Benutzeroberflächenbaustein identifiziert durch:
Identifizieren eines Schnittstellenbausteins oder mehrerer Schnittstellenbausteine, der bzw. die mit dem Suchkriterium assoziiert ist bzw. sind;
Präsentieren einer Liste des einen Schnittstellenbausteins oder der mehreren Schnittstellenbausteine; und
Aufnehmen einer Auswahl der identifizierten Benutzeroberflächenbausteine.

21. Herstellungsgegenstand nach Anspruch 17, wobei die maschinenlesbaren Befehle, wenn sie ausgeführt werden, bewirken, dass die Maschine den identifizierten Benutzeroberflächenbaustein zur Prozessanlagenbedieneroberfläche hinzufügt durch:
Laden des Benutzeroberflächenbausteins in einen maschinenzugänglichen Speicher;
Hinzufügen einer mit dem Benutzeroberflächenbaustein assoziierten Grafik zur Prozessanlagenbedieneroberfläche; und
Initiieren einer Ausführung des Benutzeroberflächenbausteins.

22. Herstellungsgegenstand nach Anspruch 17, wobei der Benutzeroberflächenbaustein eine Anzeige eines Datenwerts, eine Anzeige einer Grafik, eine Anzeige eines Grafikbilds, eine Anzeige aktueller Daten, eine Anzeige von Verlaufsdaten, einer Anzeige einer Liste von Daten, eine Anzeige von aus einer Datenbank extrahierten Daten, eine Anzeige von aus einer Prozessanlagensteuerung erfassten Daten, eine Anzeige von aus einem Prozessanlagenfeldgerät erfassten Daten und/oder eine transaktionsbasierte Oberfläche umfasst.

## Revendications

1. Procédé pour créer une interface opérateur d'une installation de traitement, le procédé consistant à :
recevoir un critère de recherche ;
identifier un module d'interface utilisateur sur la base du critère de recherche, incluant la recherche d'une bibliothèque de modules d'interface et comparer le critère de recherche avec au moins un élément parmi des métadonnées ou un texte intégré associé à un module respectif parmi deux ou plus de deux modules d'interface utilisateur de la bibliothèque de modules d'interface ; et
ajouter le module d'interface utilisateur identifié à l'interface opérateur de l'installation de traitement.

2. Procédé selon la revendication 1, dans lequel le critère de recherche comprend au moins un élément parmi un mot, deux ou plus de deux mots, une phrase, une expression logique de mots, une expression logique de phrases, ou une expression logique de mots et de phrases.

3. Procédé selon la revendication 1, dans lequel le au moins un élément parmi des métadonnées ou du texte intégré associé à chacun des deux ou plus de deux modules d'interface utilisateur comprend au moins un élément parmi un titre de module d'interface, une description de module d'interface, ou un mot-clé de module d'interface.

4. Procédé selon la revendication 1, dans lequel identifier le module d'interface utilisateur consiste à :
identifier un ou plusieurs modules d'interface utilisateur associés aux critères de recherche ;
présenter une liste des un ou plusieurs modules d'interface utilisateur ; et
recevoir une sélection constituée du module d'interface utilisateur identifié.

5. Procédé selon la revendication 1, dans lequel ajouter le module d'interface utilisateur identifié à l'interface opérateur de l'installation de traitement consiste à :
charger le module d'interface utilisateur dans une mémoire accessible par une machine ;
ajouter un graphique associé au module d'interface utilisateur à l'interface opérateur de l'installation de traitement ; et
déclencher une exécution du module d'interface utilisateur.

6. Procédé selon la revendication 1, dans lequel le module d'interface utilisateur et l'interface opérateur de l'installation de traitement sont exécutés au niveau d'un même ordinateur.

7. Procédé selon la revendication 1, dans lequel le module d'interface utilisateur et l'interface opérateur de l'installation de traitement sont exécutés au niveau d'ordinateurs différents, et dans lequel l'interface opérateur de l'installation de traitement affiche des données fournies par le module d'interface utilisateur sur l'interface opérateur de l'installation de traitement.

8. Procédé selon la revendication 1, dans lequel le module d'interface utilisateur comprend au moins un parmi un affichage d'une valeur de données, un affichage d'un graphique, un affichage d'une image graphique, un affichage de données courantes, un affichage de données d'historique, un affichage d'une liste de données, un affichage de données extraites à partir d'une base de données, un affichage de données recueillies à partir d'une commande de l'installation de traitement, un affichage de données recueillies à partir d'un dispositif de terrain de l'installation de traitement, ou une interface à base de transactions.

9. Procédé selon la revendication 1, dans lequel la bibliothèque de modules d'interface est mémorisée au niveau d'un ordinateur présentant l'interface opérateur de l'installation de traitement.

10. Procédé selon la revendication 1, dans lequel la bibliothèque de modules d'interface est mémorisée à distance à partir d'un ordinateur présentant l'interface opérateur de l'installation de traitement.

11. Appareil de station opérateur comprenant :
un affichage ;
un module d'affichage opérateur pour présenter une interface opérateur de l'installation de traitement sur l'affichage ;
un moteur de recherche pour identifier un module d'interface utilisateur sur la base d'un critère de recherche, le module d'affichage opérateur pour afficher une sortie du module d'interface utilisateur ; et
une bibliothèque de modules d'interface utilisateur, dans laquelle le critère de recherche est comparé à au moins un élément parmi des métadonnées ou un texte intégré associé à chacun de plusieurs modules d'interface mémorisés dans la bibliothèque de modules d'interface utilisateur pour identifier le module d'interface utilisateur ayant la sortie à afficher.

12. Appareil selon la revendication 11, comprenant de plus une interface réseau, dans laquelle la bibliothèque de modules d'interface utilisateur est située à distance par rapport à l'appareil de station opérateur, et la bibliothèque de modules d'interface utilisateur est cherchée par l'intermédiaire de l'interface réseau.

13. Appareil selon la revendication 11, dans lequel le au moins un élément parmi des métadonnées ou du texte intégré associé à chacun des plusieurs modules d'interface comprend au moins un élément parmi un titre de module d'interface, une description de module d'interface, ou un mot-clé de module d'interface.

14. Appareil selon la revendication 11, dans lequel le module d'affichage opérateur est destiné à :
présenter une première interface pour recevoir le critère de recherche ;
présenter une seconde interface pour présenter un résultat de recherche et pour recevoir une entrée de sélection d'interface associée au module d'interface utilisateur identifié ; et
ajouter le module d'interface utilisateur à l'interface opérateur de l'installation de traitement.

15. Appareil selon la revendication 11, dans lequel le module d'interface utilisateur comprend au moins un élément parmi un affichage d'une valeur de données, un affichage d'un graphique, un affichage d'une image graphique, un affichage de données courantes, un affichage de données d'historique, un affichage d'une liste de données, un affichage de données extraites d'une base de données, un affichage de données recueillies à partir d'une commande de l'installation de traitement, un affichage de données recueillies à partir d'un dispositif de terrain de l'installation de traitement, ou une interface à base de transactions.

16. Appareil selon la revendication 11, dans lequel l'appareil de station opérateur comprend une station opérateur d'un système de commande d'installation de traitement.

17. Article fabriqué mémorisant des instructions pouvant être lues par une machine qui, lorsqu'elles sont exécutées, amènent une machine à créer une interface opérateur d'une installation de traitement en :
recevant un critère de recherche ;
identifiant un module d'interface utilisateur sur la base du critère de recherche, incluant une recherche d'une bibliothèque de modules d'interface et en comparant le critère de recherche avec au moins un élément parmi des métadonnées ou du texte intégré associé à un élément respectif parmi deux ou plus de deux modules d'interface utilisateur de la bibliothèque de modules d'interface ; et
ajoutant le module d'interface utilisateur identifié à l'interface opérateur de l'installation de traitement.

18. Article fabriqué selon la revendication 17, dans lequel le critère de recherche comprend au moins un élément parmi un mot, deux ou plus de deux mots, une phrase, une expression logique de mots, une expression logique de phrases, ou une expression logique de mots et de phrases.

19. Article fabriqué selon la revendication 18, dans lequel le au moins un élément parmi les métadonnées ou le texte intégré associé à chacun des deux ou plus de deux modules d'interface utilisateur comprend au moins un élément parmi un titre de module d'interface, une description de module d'interface, ou un mot-clé de module d'interface.

20. Article fabriqué selon la revendication 17, dans lequel les instructions pouvant être lues par une machine, lorsqu'elles sont exécutées, amènent la machine à identifier le module d'interface utilisateur en :
identifiant un ou plusieurs modules d'interface utilisateur associés au critère de recherche ;
présentant une liste constituée des un ou plusieurs modules d'interface utilisateur ; et
recevant une sélection constituée du module d'interface utilisateur identifié.

21. Article fabriqué selon la revendication 17, dans lequel les instructions pouvant être lues par une machine, lorsqu'elles sont exécutées, amènent la machine à ajouter le module d'interface utilisateur identifié à l'interface opérateur de l'installation de traitement en :
chargeant le module d'interface utilisateur dans une mémoire accessible par machine ;
ajoutant un graphique associé au module d'interface utilisateur à l'interface opérateur de l'installation de traitement ; et
déclenchant une exécution du module d'interface utilisateur.

22. Article fabriqué selon la revendication 17, dans lequel le module d'interface utilisateur comprend au moins un élément parmi un affichage d'une valeur de données, un affichage d'un graphique, un affichage d'une image graphique, un affichage de données courantes, un affichage de données d'historique, un affichage d'une liste de données, un affichage de données extraites d'une base de données, un affichage de données recueillies à partir d'une commande de l'installation de traitement, un affichage de données recueillies à partir d'un dispositif de terrain de l'installation de traitement, ou une interface à base de transactions.
